# EUROPÄISCHE PATENTANMELDUNG

(11) **EP 4 521 100 A1**
(43) Veröffentlichungstag der Anmeldung: **12.03.2025**
(21) Anmeldenummer: 24199458.1
(22) Anmeldetag: 10.09.2024
(51) Int. Cl.: G01N 21/90, B65C 9/40

(54) **VERFAHREN UND VORRICHTUNG ZUM INSPIZIEREN VON MIT AUSSTATTUNGEN VERSEHENEN BEHÄLTNISSEN**

(30) Priorität: 11.09.2023 DE 102023124451
(71) Anmelder: Krones AG, 93073 Neutraubling (DE)
(72) Erfinder: Kraus, Andreas, 93073 Neutraubling (DE); Hewicker, Alexander, 93073 Neutraubling (DE); Niedermeier, Anton, 93073 Neutraubling (DE); Piana, Stefan, 93073 Neutraubling (DE)
(74) Vertreter: Bittner, Bernhard

(57) **Zusammenfassung**

Verfahren zum Inspizieren von Behältnissen (1) wobei auf wenigstens einem Oberflächenbereich einer Außenwandung eines Behältnisses eine Ausstattung angebracht wird wobei diese Ausstattung (10) wenigstens ein trägerloses Ausstattungselement und bevorzugt eine Vielzahl von Ausstattungselementen (10a, 10b, 10c) aufweist welche wenigstens teilweise nicht miteinander verbunden sind, dadurch gekennzeichnet, dass dieser mit diesem wenigstens einen Ausstattungselement oder mit diesen Ausstattungselementen (10a, 10b, 10c) ausgestattete Oberflächenbereich mittels einer Inspektionseinrichtung (4) inspiziert wird und wenigstens ein Kennwert (A) ausgegeben wird, der für wenigstens eine für das erste Ausstattungselement charakteristische Eigenschaft charakteristisch ist.

## Beschreibung

Die vorliegende Erfindung bezieht sich auf ein Verfahren und eine Vorrichtung zum Inspizieren von ausgestatteten Behältnissen, insbesondere von Flüssigkeitsbehältnissen und insbesondere von Getränkebehältnissen.

Aus dem Stand der Technik sind zahlreiche solcher Verfahren und Vorrichtungen bekannt.

Unter einem Ausstatten von Behältnissen wird im Rahmen der vorliegenden Erfindung insbesondere verstanden, dass die Behältnisse mit Etiketten und/oder Aufdrucken versehen werden. Diese Etiketten und/oder Aufdrucke werden insbesondere an einer Umfangswandung der Behältnisse aufgebracht

Aus der EP 2 290 355 A2 ist eine Vorrichtung und ein Verfahren zum Inspizieren etikettierter Gefäße bekannt. Dabei ist eine Beleuchtungseinrichtung vorgesehen, welche mindestens zwei getrennt ansteuerbare Leuchtschirme aufweist. Aus der EP 3 612 452 ist ein Etikett bekannt. Die EP 0 820 933 B1 beschreibt eine Etikettiermaschine.

Die Qualitätskontrolle des Etikettierprozesses, Dekorationsprozesses (im Folgenden auch als Ausstattungsprozess bezeichnet) oder auch eines Druckprozesses bilden heute meist kamerabasierte Inspektionseinheiten. Diese prüfen nach dem Etikettierprozess verschiedene Aspekte wie bspw. ob das Etikett richtig positioniert ist oder ob es sich um das richtige Etikettendesign handelt.

Für die richtige Position (X/Y) und Orientierung (°) eines klassischen Etiketts ist es ausreichend eine markante (Teil-)Stelle des Etiketts bzw. des Ausstattungselements auf dessen Position und Orientierung zu überprüfen. Da alle Dekorelemente über das Etikettengrundmaterial, wie Papier oder Kunststoff fest miteinander verbunden sind, kann aus der wenigstens einen, markanten Stelle auf den korrekten Sitz des gesamten Etiketts gefolgert werden.

Das richtige Etikettendesign in Summe, kann anhand von charakteristischen, aussagekräftigen Stellen bewertet werden. So ist es ausreichend, einen aussagekräftigen 1D oder 2 D Code zu identifizieren, eine eindeutige alphanumerische Etiketten-ID Nummer zu lesen um das gesamte Etikett als solches zu identifizieren.

Wird ein Fehler erkannt, reagiert das Gesamtsystem bspw. darauf in dem es diese fehletikettierten Flaschen ausschleust und/oder indem sofern möglich dem Fehler entgegengeregelt wird.

Im internen Stand der Technik der Anmelderin sind Ausstattungsprozesse bekannt geworden, bei denen nicht ein gesamtes Etikett aufgebracht wird sondern einzelne Ausstattungselemente, die jedoch vorteilhaft nicht miteinander verbunden sind.

Bei einem weiteren neuartigen Ausstattungs- bzw. Dekorationsverfahren wird ein neuartiges Dekor verwendet. Dieses besitzt das im "Stand der Technik" beschriebene Grundträgermaterial nicht mehr, d.h. das Dekor besteht in diesem Fall nur aus Farbe sowie Klebstoff und ist aufgrund dessen besonders anfällig, während des gesamten Verarbeitungsprozesses zu reißen, umzufalten, kleine Teile abgetrennt zu bekommen etc.

Die Inspektion einer klassischen Etikettierung beinhaltet heute nicht, dass alle zu übertragenen Einzelelemente des Einzeldekors vorhanden und auch vollständig vorhanden sind.

Es wird auch nicht überprüft, ob die Einzelelemente der Einzeldekors vollständig und unbeschädigt, unverzerrt (und/oder fehlerfrei, etwa ohne Risse oder dergleichen) auf das Behältnis übertragen wurden.

Weiterhin wird auch nicht überprüft, ob alle zu übertragenen Einzelelemente des Einzeldekors zueinander insbesondere in Laufrichtung der zu dekorierenden Objekte bezüglich horizontaler und vertikaler Lage sowie Winkelausrichtung richtig positioniert sind und/oder richtig zueinander positioniert sind.

Daneben wird auch nicht geprüft, ob alle zu übertragenen Einzelelemente des Einzeldekors korrekt sind (insbesondere inhaltlich korrekt sind) und diese den richtigen Informationsgehalt abbilden. Dies gilt Insbesondere für den sog. Legal Text, wie z.B. die Alkoholangabe. Sollte sie 12% lauten und die 1 wurde nicht übertragen, würde auf dem Behälter stattdessen 2% stehen.

Es wird weiterhin nicht geprüft, ob die Einzelelemente und bevorzugt alle Einzelelemente maßhaltig sind. So kann es beispielsweise, wie die Anmelderin in Experimenten herausgefunden hat, zu Streckungen der Stauchungen beim Aufbringen der Ausstattungen kommen.

Daneben sind die aus dem Stand der Technik bekannten Inspektionssysteme sowie die entsprechenden Etikettiervorrichtungen bzw. Ausstattungsvorrichtungen nicht dazu in der Lage auf fehlerhafte Positionierung der Einzelelemente zueinander entsprechend zu reagieren.

Der vorliegenden Erfindung liegt daher die Aufgabe zugrunde, die Inspektion von Behältnissen, insbesondere für Behältnisse, welche eine Vielzahl von Ausstattungselementen aufweisen, zu verbessern.

Diese Aufgabe wird erfindungsgemäß durch die Gegenstände der unabhängigen Patentansprüche gelöst. Vorteilhafte Ausführungsformen und Weiterbildungen sind Gegenstand der Unteransprüche.

Bei einem erfindungsgemäßen Verfahren zum Inspizieren von Behältnissen wird auf wenigstens einem Oberflächenbereich einer Außenwandung eines Behältnisses eine Ausstattung angebracht wobei diese Ausstattung wenigstens ein trägerloses Ausstattungselement und/oder bevorzugt eine Vielzahl von Ausstattungselementen aufweist welche wenigstens teilweise nicht miteinander verbunden sind. Im einfachsten Fall wäre es jedoch auch möglich, nur ein (insbesondere trägerloses) Ausstattungselement anzubringen. Unter trägerlos wird dabei insbesondere verstanden, dass das Ausstattungselement selbst auf dem Behältnis angebracht wird und insbesondere das Ausstattungselement nicht auf einem Träger angeordnet ist.

Bevorzugt ist keines der Ausstattungselemente mit einem weiteren Ausstattungselement verbunden. Bevorzugt weist die Ausstattung keinen die einzelnen Ausstattungselemente verbindenden Träger auf. Bevorzugt werden daher die Ausstattungselement vereinzelt und/oder einzeln auf dem Oberflächenbereich angebracht.

Erfindungsgemäß wird dieser diesem wenigstens einen Ausstattungselement oder mit diesen Ausstattungselementen ausgestattete Oberflächenbereich mittels einer Inspektionseinrichtung inspiziert und es wird wenigstens ein Kennwert ausgegeben, der für wenigstens eine für das Ausstattungselement (oder für diese Ausstattungselemente) charakteristische Eigenschaft charakteristisch ist.

Dies bedeutet, dass bevorzugt die betreffende Eigenschaft gerade für das betreffende Ausstattungselement charakteristisch ist und dass wiederum der Kennwert für die betreffende Eigenschaft charakteristisch ist.

Im Rahmen der vorliegenden Anmeldung wird der Begriff der Ausstattung verwendet, teilweise aber auch der Begriff "Dekorieren" . Diese beiden Begriffe werden als gleichbedeutend angesehen.

Bei einem weiteren bevorzugten Verfahren kann der Kennwert auch für einen Fehlerzustand eines Ausstattungselements oder der Ausstattung charakteristisch sein, beispielsweise für Verzerrungen, Risse und dergleichen.

Bei einem bevorzugten Verfahren handelt es sich bei der Eigenschaft um eine für das erste Ausstattungselement individuell charakteristische Eigenschaft.

Dies bedeutet, dass diese Eigenschaft nur das erste Ausstattungselement kennzeichnet und nicht auch weitere Ausstattungselemente, dass also das erste Ausstattungselement individuell untersucht wird. Bevorzugt werden mehrere Ausstattungselemente individuell untersucht und es werden bevorzugt mehrere solcher Kennwerte ausgegeben.

Bei einem bevorzugten Verfahren handelt es sich bei der Eigenschaft um eine für das erste Ausstattungselement individuell charakteristische Eigenschaft.

Dies bedeutet, dass diese Eigenschaft nur das erste Ausstattungselement kennzeichnet und nicht auch weitere Ausstattungselemente, dass also das erste Ausstattungselement individuell untersucht wird. Bevorzugt werden mehrere Ausstattungselemente individuell untersucht und es werden bevorzugt mehrere solcher Kennwerte ausgegeben.

Bei einem bevorzugten Verfahren ist der Kennwert für eine Position eines ersten Ausstattungselements bezüglich des Oberflächenbereiches und/oder eine Position eines ersten Ausstattungselements bezüglich eines zweiten Ausstattungselements charakteristisch.

Die Erfindung kann daher Anwendung finden, wenn mehrere Ausstattungsmerkmale auf dem Behältnis aufgebracht werden, es ist jedoch auch eine Anwendung möglich, wenn nur ein (insbesondere trägerloses) Ausstattungsmerkmal aufgebracht wird.

Die Erfindung ist also auch dann anwendbar, wenn nicht mehrere Ausstattungselemente, sondern nur ein Ausstattungselement vorhanden ist. Ist das Ausstattungselement beschädigt, kann es (bzw. das betreffende Behältnis) ausgeleitet werden und ggf. kann Regel- oder Steuerungstechnisch auf den Ausstattungsprozess eingegriffen werden und künftige Beschädigungen vermieden werden.

Bei einem weiteren bevorzugten Verfahren ist der Kennwert für die Übereinstimmung einer Ist - Beschaffenheit des Ausstattungselements mit einer Soll-Beschaffenheit des Ausstattungselements charakteristisch, vorzugsweise für die Beschaffenheit/Abweichung der Kontur des Ausstattungselements. Bei Konturabweichung im Bereich von einer vorgegebenen Schwelle (vorzugsweise -0,2mm, aber auch zwischen -0,2mm/-0,5mm) wird der charakteristische Kennwert ausgegeben.

Unter einer Ausstattung wird im Rahmen der vorliegenden Patentanmeldung insbesondere ein Dekor verstanden aber auch Markierungen, welche einen Informationsgehalt aufweisen, wie etwa Namen, Zahlen, Buchstaben oder Codes. Bevorzugt handelt es sich bei der Ausstattung und/oder den Ausstattungselementen um optisch wahrnehmbare Elemente, welche an der Oberfläche des Behältnisses angebracht werden. Bevorzugt handelt es sich im Rahmen der vorliegenden Erfindung jedoch nicht um weitere Ausstattungen wie etwa einen Behältnisverschluss.

Bei einem bevorzugten Verfahren handelt es sich bei der Eigenschaft um eine für das erste Ausstattungselement individuell charakteristische Eigenschaft.

dies bedeutet, dass diese Eigenschaft nur das erste Ausstattungselement kennzeichnet und nicht auch weitere Ausstattungselemente, dass also das erste Ausstattungselement individuell untersucht wird. Bevorzugt werden mehrere Ausstattungselemente individuell untersucht und es werden bevorzugt mehrere solcher Kennwerte ausgegeben.

Während im Stand der Technik keine Möglichkeit gegeben ist, die diversen Systemtoleranzen (Flaschentoleranzen, Vorschubtoleranzen, Etikettenelement-Toleranzen...) im Vorfeld zu erfassen und diese auszuregeln (während und/oder zwischen dem Produktionsbetrieb) wird im Rahmen der Erfindung eine Möglichkeit zu einer derartigen Regelung vorgeschlagen.

Daneben wird auch eine Möglichkeit geschaffen, um nach einer erfolgten Platzierung der Einzelelemente bzw. Ausstattungselemente bei Abweichung mit Trend vom Soll-Abstand diesen auf einen Soll-Abstand nachzuregeln.

Die Inspektionseinrichtung erfasst bevorzugt mehrere und besonders bevorzugt alle relevanten und zur Regelung (der Ausstattungseinrichtung) notwendigen Daten. Diese Daten sind bevorzugt aus einer Gruppe von Daten ausgewählt, welche eine Position und/oder Lage der Ausstattungselemente (eines Einzeldekors bzw. einer Ausstattung zueinander) eine Drehstellung der Ausstattungselemente und/oder eine Ist - Gestalt der Ausstattungselemente enthält.

Die Inspektionseinrichtung erfasst weiterhin bevorzugt alle für die Wirkung sowie zur Botschaft des Dekors wichtigen Elemente/Einzelelemente, insbesondere Texte, Markenbotschaften, rechtliche Hinweise, Inhaltsstoffe sowie Anteile etc. auf Vollständigkeit sowie Richtigkeit.

Grund ist die oben beschriebene Sensitivität dieses Dekorationsprozesses, insbesondere der Sensitivität des aufzubringenden Dekors, da diesem das bei Etiketten übliche Trägermaterial fehlt (Papieretiketten => Papier; Kunstoffetiketten => Kunststofffolie).

Werden Abweichungen vom erfassenden System erkannt und ein Kennwert generiert erfolgt die Signalweitergabe an bspw. ein Behälterausschleusungssystem, um nicht tolerierbare Abweichungen vom Gut-Produktstrom zu trennen und nicht weiter zu verarbeiten.

Alternativ (insbesondere Abweichungen mit Trend, Einzelabweichungen oder ähnliches), regelt bevorzugt das System (insbesondere eine Steuerungseinrichtung der Ausstattungseinrichtung und/oder der gesamten Anlage diese Abweichungen (vorzugsweise in Laufrichtung) nach. Dies kann beispielsweise über eine Servoregelung oder ähnliches erfolgen.

Bevorzugt erfasst die Inspektionseinrichtung mehrere und bevorzugt alle relevanten und zur Regelung notwendigen Daten wie etwa eine Position und/oder Lage der Ausstattungselemente zueinander.

Diese Erfassung kann dabei bevorzugt direkt in der Etikettiervorrichtung bzw. der Ausstattungseinrichtung erfolgen. Hier ist die die Ausrichtung der Behältnisse bezüglich ihrer vertikalen Achse noch im Wesentlichen unverändert gegeben.

Bei einem bevorzugten Verfahren wird die Ausstattung auf bereits befüllten und verschlossenen Behältnissen angebracht. Es wäre jedoch, insbesondere bei Kunststoffbehältnissen auf denkbar, die Ausstattung auch noch leeren Behältnissen anzubringen.

Bevorzugt wird auf leere Behälter gedruckt, damit im Falle eines Fehldrucks kein Produkt vernichtet werden muss, sondern nur der Behälter. Technisch ist aber beides möglich.

Auch ist es möglich, die Erfassung erst nach der Übergabe der Behältnisse beispielsweise auf einer nachfolgenden Transporteinrichtung durchzuführen. Da dort die Behälterausrichtung üblicherweise nicht mehr gewährleistet ist, findet in diesem Fall bevorzugt eine Rundumerfassung mit entsprechender Auswertung statt.

Außerdem sind aufgrund des längeren Transportwegs dann die Zeitkonstanten für die Regelung deutlich höher.

Die Regelung kann als Eingangsgröße nur einen Abstandswert zwischen zwei Ausstattungselementen des Dekors verwenden, aber auch eine Kombination verschiedener Werte (beispielsweise mehrerer Abstandswerte, Informationen zu einer Drehstellung eines oder mehrerer Ausstattungselemente und dergleichen).

Die Regelung kann dabei auf mehrere Behälter gleichzeitig wirken, z.B. durch Variation der Transportgeschwindigkeit während des Aufbringens, aber auch auf einzelne Behälter, etwa durch Variation der Rotationsgeschwindigkeit während des Aufbringens oder durch eine Kombination daraus.

Daneben wäre es auch denkbar eine Veränderung durch eine Variation der Übergabegeschwindigkeiten von Dekor auf den jeweiligen zu dekorierenden Behältnissen zu erreichen. Alternativ oder zusätzlich wäre auch eine Verstellung bestimmter Positionierungssysteme der Applikation denkbar.

Bevorzugt werden die Erfassung und Steuerung und/oder Regelung (der Ausstattungseinrichtung) gemeinsam auf einer Rechnereinheit ausgeführt. Es wäre jedoch auch denkbar dass diese Vorgänge in getrennten Systemen durchgeführt werden z.B. in einem Inspektionssystem zur Erfassung und in einer Maschinensteuerung zur Regelung, welche über eine geeignete Schnittstelle kommunizieren können.

Bei dem neuartigen und im Rahmen dieser Anmeldung gegenständlichen Ausstattungs- bzw. Etikettierverfahren sind die Bestandteile des Etiketts auf einer Trägerschicht aufgebracht. Die Bestandteile des Etiketts sind mit einer Klebeschicht angereichert. Die Klebeschicht ist bevorzugt auf den Bestandteilen der Trägerschicht abgewandten Seite angebracht. Alternativ ist die Klebeschicht auf den Bestandteilen der Trägerschicht zugewandten Seite angebracht.

Beim Aufbringen der Bestandteile auf das Behältnis, dem Etikettiervorgang, bzw. dem Dekorations- oder Ausstattungsvorgang, werden die Bestandteile vom Trägerband gelöst und ohne jegliches Trägermaterial auf den Behältnissen aufgebracht. Die Klebeschicht geht mit dem Behälter eine feste Verbindung ein und fixiert die Etikettenelemente dauerhaft.

Die Trägerschicht mit dem Etikett wird bevorzugt als Rolle mit vielen "Etiketten" in die Etikettiermaschine eingelegt. Das Trägermaterial wird bevorzugt an der Etikettiermaschine zurückbehalten, gesammelt und entsorgt.

Bei einer bevorzugten Ausführungsform ist die Ausstattung und oder sind die Ausstattungselemente optisch und/oder haptisch wahrnehmbar.

Besonders bevorzugt sind die Ausstattungselemente aus einem Kunststoff hergestellt. Bevorzugt handelt es sich auch bei dem Behältnis um ein Kunststoffbehältnis. Es wäre jedoch auch die Verwendung eines Glas Behältnisses denkbar. Daneben kann es sich bei dem Behältnis auch um ein metallisches Behältnis wie etwa eine Dose handeln oder auch um aus Fasern hergestellte Behältnisse.

Bei einem weiteren bevorzugten Verfahren werden die Ausstattungselemente ausgehend von einem Trägerelement, bevorzugt einem Trägerband auf die Behältnisse angebracht. Dies bedeutet, dass sich die Ausstattungselemente bevorzugt zunächst auf einem Trägerband befinden und bevorzugt dieses Trägerband an die auszustattenden Behältnisse herangeführt wird und auf diese Weise die Ausstattungselemente von dem Trägerband auf das Behältnis übertragen werden.

Dabei wird bevorzugt das Trägerband zum Zweck der Aufbringung der Ausstattungselemente über eine Kante geführt. Alternativ wird das Trägerband zum Zweck der Aufbringung der Ausstattungselemente über Rotationskörper und darauf befindlichen Übergabeelementen (bspw. eine Transfertrommel) geführt.

Bevorzugt sind die Ausstattungselemente aus einer Gruppe von Ausstattungselementen ausgewählt, welche QR Codes, Strichcodes, Zahlen, Buchstaben, Bildelemente und dergleichen enthalten. Dabei können die Ausstattungselemente auch farblich ausgestattet sein.

Bei einem weiteren bevorzugten Verfahren wird erfasst, ob alle Ausstattungselemente, welche gemäß einer Vorgabe vorhanden sein sollen, tatsächlich vorhanden sind. Es wird damit bevorzugt eine Soll - Zusammenstellung der Ausstattungselemente mit einer Ist - Zusammenstellung verglichen. Auf diese Weise kann überprüft werden, ob eine vollständige Übertragung aller Ausstattungselemente und eben auch eine vollständige Übertragung jedes einzelnen Ausstattungselement oder auch eine vollständige Übertragung nur eines Ausstattungselements auf das Behältnis stattgefunden hat. Sollte festgestellt werden, dass einzelne Ausstattungselemente fehlen, kann das betreffende Behältnis ausgeschleust werden und/oder es kann der Ausstattungsvorgang überprüft werden.

Sollte das jeweils einzelne Ausstattungselement in sich nicht vollständig, beschädigt, gerissen oder dergleichen sein, kann, muss das betreffende Behältnis ausgeschleust werden. Gleichzeitig könnte der entsprechende Kennwert für eine entsprechende Regelung oder Steuerung des Dekorationsprozesses verwendet werden, indem z.B. ein Anpressdruck, eine relative Übergabegeschwindigkeit (der Geschwindigkeitsverlauf zwischen dem Ausstattungselement und dem Behälter beim Kontaktierprozess) oder andere Verstellmöglichkeiten nachgeregelt oder gesteuert werden.

Bei einem weiteren bevorzugten Verfahren wird geprüft, ob die einzelnen Ausstattungselemente an einer Soll - Position (an dem Behältnis und/oder bezüglich einander) angeordnet sind und/oder ob die einzelnen Ausstattungselemente in einer Soll - Drehstellung an dem Behältnis (und/oder bezüglich einander) angeordnet sind.

Bei einem weiteren bevorzugten Verfahren wird geprüft, ob ein tatsächlich auf dem Behältnis aufgebrachtes Ausstattungselement einem auf dem Behältnis aufzubringenden Ausstattungselement entspricht. So kann beispielsweise ein Ausstattungselement, etwa in Form eines Strichcodes auf die in dem Behältnis befindliche Flüssigkeit hinweisen. Auf diese Weise kann also festgestellt werden, ob das Ausstattungselement zutreffend auf die in dem Behältnis befindliche Flüssigkeit hinweist.

Bei einem weiteren bevorzugten Verfahren wird eine Ist - Form eines Ausstattungselements mit einer Soll -Form verglichen. So können beispielsweise eine Stauchung oder Streckung des tatsächlich an dem Behältnis angebrachten Ausstattungselements oder die Vollständigkeit der Kontur des Ausstattungselements überprüft oder in Erfahrung gebracht werden. Mit anderen Worten kann beispielsweise geprüft werden, ob eine Ist - Form eines Etiketts oder auch der Zusammenstellung der Ausstattungselemente oder auch eines einzelnen Ausstattungselements einer Soll - Zusammenstellung oder einer Soll - Gestalt entspricht.

Besonders bevorzugt bei der Konturüberprüfung sind Abweichungen im Bereich von -0,2mm bis -0,5mm gegenüber der Sollkontur zu erfassen. Dadurch kann das System sowohl sehr feine Abweichungen aber auch massive Abweichungen erfassen.

Bei einem weiteren bevorzugten Verfahren werden Ausstattungselemente an der Oberfläche des Behältnisses befestigt und insbesondere angeklebt.

Besonders bevorzugt handelt es sich bei der Oberfläche des Behältnisses um einen Außenumfang. Insbesondere handelt es sich bei der Behältnisoberfläche um eine umlaufende Fläche und insbesondere um eine zylinderförmige oder kegelstumpfförmige Oberfläche.

Bei einem weiteren bevorzugten Verfahren handelt es sich bei dem Oberflächenbereich des Behältnisses, an dem die Ausstattungselemente angebracht werden um einen glatten oder leicht gekrümmten Oberflächenbereich. Es ist aber auch denkbar, dass die Anbringung an Oberflächen mit einer gewissen Rauigkeit erfolgt (z.B: orange peel), da die an den Ausstattungselementen angeordnete Klebstoffschicht gewisse Rauigkeiten ausgleichen kann.

Durch das Fehlen des Trägermaterials können sich die zu übertragenden Dekore/Ausstattungselemente leichter an gekrümmte Flächen anpassen. Diese sind dadurch weniger anfällig für Faltenbildung oder ähnlich. Bevorzugt sind die Übergänge von glatten Flächen in diese Krümmungen sanft/fließend, Kanten sind zu vermeiden.

Durch das Fehlen des Trägermaterials kann diese Ausstattungsart eine bevorzugte Alternative für sog. "No Label Look" Etiketten (NLL-E) sein. Die NLL-E zeichnen sich durch ein flächiges transparentes Grundmaterial und partiell bedruckte Bereiche aus. Im Stand der Technik ist bekannt, dass NNL-E auf unebenen Flächen beim Aufbringen gerne Lufteinschlüsse verursachen. Diese Lufteinschlüsse mit ihren zwei zusätzlichen optischen Grenzübergängen von Medium zu Luft und umgekehrt sind mit dem Auge sehr deutlich wahrnehmbar. Deshalb wird beim Aufbringen von einem NLL-E darauf geachtet, dass es z.B. nicht über der sogenannten Pressnaht des Behälters liegt. Anders verhält es sich bei dieser Ausstattungsart. Insbesondere können prinzipbedingt zwischen den Ausstattungselementen keine Lufteinschlüsse erfolgen.

Bei einem weiteren bevorzugten Verfahren weist wenigstens ein Ausstattungselement zu wenigstens einem weiteren Ausstattungselement und bevorzugt zu jedem weiteren Ausstattungselement einen vorgegebenen Mindestabstand auf.

Besonders bevorzugt ist dieser Mindestabstand größer als 0,5 mm, bevorzugt größer als 1 mm und besonders bevorzugt größer 1,5 mm. Bei einem weiteren bevorzugten Verfahren ist dieser Mindestabstand kleiner als 30 mm, bevorzugt kleiner 25 mm, bevorzugt kleiner als 20 Millimeter und bevorzugt kleiner 15 mm.

Bevorzugt werden Grenzwerte festgelegt, innerhalb derer ein ermittelter Ist - Mindestabstand bezüglich eines Soll - Mindestabstands zweier Ausstattungselemente liegen soll. Falls im Wege der Inspektion festgestellt wird, dass ein Ist- Mindestabstand außerhalb dieser Grenzwerte liegt, können Gegenmaßnahmen eingeleitet werden.

Bei einem weiteren bevorzugten Verfahren erfolgt die Inspektion mittels einer Bildaufnahmeeinrichtung, welche bevorzugt wenigstens ein ortsaufgelöstes Bild, der mit Ausstattungselementen versehenen Oberfläche aufnimmt.

Bevorzugt erfolgt die Bildaufnahme unmittelbar nach der Ausstattung der Behältnisse. Unter unmittelbar wird dabei verstanden, dass die Bildaufnahme innerhalb eines Zeitraums nach der Ausstattung erfolgt, der geringer ist als 10s, bevorzugt geringer als 8s, bevorzugt geringer als 6s, bevorzugt geringer als 5s.

Besonders bevorzugt wird die Oberfläche beleuchtet und insbesondere auch während einer Erstellung der Aufnahme mittels der Bildaufnahmeeinrichtung beleuchtet. Be einem weiteren bevorzugten Verfahren erfolgt die Beleuchtung der Oberfläche mittels Weißlicht. Besonders bevorzugt erfolgt die Beleuchtung der Oberfläche mittels gerichteter und/oder diffuser Strahlung und insbesondere mittels gerichtetem und/oder diffusen Licht.

Besonders bevorzugt erfolgt eine Bildaufnahme mittels eines Auflichtverfahrens. Besonders bevorzugt handelt es sich bei der Beleuchtungseinrichtung um eine Blitzlampe, welche wenigstens für den Zeitraum der Bildaufnahme den (mit den Ausstattungselementen versehenen) Oberflächenbereich des Behältnisses beleuchtet.

Bei einem weiteren bevorzugten Verfahren wird die Oberfläche von mehreren Bildaufnahmeeinrichtungen aufgenommen.

Besonders bevorzugt wird ein aufgenommenes Bild von der mit den Ausstattungselementen versehenen Oberfläche mit wenigstens einem Referenzbild verglichen. Auf diese Weise wir bevorzugt festgestellt, ob alle Ausstattungselemente vorhanden sind und/oder ob die Ausstattungselemente die korrekte Position, die korrekte Drehstellung und/oder den korrekten Abstand zu weiteren Ausstattungselementen aufweisen.

Bei einem weiteren bevorzugten Verfahren wird eine geometrische Gestalt wenigstens eines Ausstattungselements und bevorzugt mehrerer Ausstattungselemente erfasst.

Bei einem weiteren bevorzugten Verfahren ist der Kennwert aus einer Gruppe von Kennwerten ausgewählt, welche einen Kennwert, der für eine Position des Ausstattungselements gegenüber dem Oberflächenbereich in einer Längsrichtung des Behältnisses, für eine Position des Ausstattungselements gegenüber dem Oberflächenbereich in einer Umfangsrichtung des Behältnisses, für eine Position eines Ausstattungselements gegenüber einem weiteren Ausstattungselement in der Längsrichtung des Behältnisses, für eine Position des Ausstattungselements gegenüber einem weiteren Ausstattungselement in einer Umfangsrichtung des Behältnisses, für eine Drehstellung des Ausstattungselements gegenüber dem Oberflächenbereich, für eine Drehstellung des Ausstattungselements gegenüber einem weiteren Ausstattungselement, für eine Verzerrung des Ausstattungselements, für eine Verformung des Ausstattungselements, für eine Stauchung des Ausstattungselements, für eine Dehnung des Ausstattungselements, für ein Vorhandensein des Ausstattungselements, für einen Informationsgehalt des Ausstattungselements, für die Übereinstimmung einer Ist - Beschaffenheit des Ausstattungselements mit einer Sollbeschaffenheit des Ausstattungselements, oder Kombinationen hieraus charakteristisch ist.

Besonders bevorzugt werden mehrere derartige Kennwerte erfasst. So kann beispielsweise ein Kennwert erfasst werden, der für eine Position eines ersten Ausstattungselements gegenüber einem zweiten Ausstattungselement charakteristisch ist, ein weiterer Kennwert, der für eine Position des ersten Ausstattungselements gegenüber einem dritten Ausstattungselements charakteristisch ist, sowie ein oder mehrere Kennwerte, welche für Drehstellungen von mehreren Ausstattungselementen charakteristisch sind.

Bevorzugt wird der Kennwert mit einem Referenzwert und/oder Sollwert verglichen und bevorzugt ein für diesen Vergleich charakteristisches Signal ausgegeben. So kann beispielsweise in Reaktion auf diesen Vergleich ein Steuerbefehl an die Ausstattungseinrichtung ausgegeben werden oder auch ein Befehl, das betreffende Behältnis auszuschleusen.

Bei einem weiteren bevorzugten Verfahren wird wenigstens ein Bild von dem mit den Ausstattungselementen ausgestatteten Oberflächenbereich aufgenommen und dieses Bild wird mit wenigstens einem Referenzbild verglichen.

Die Position und Rotation (Lage) der einzelnen Austattungselemente wird bevorzugt jeweils in der Referenz und in der Aufnahme der ausgestatteten Oberfläche bestimmt und verglichen. Verglichen wird bevorzugt sowohl die absolute Position bezogen auf die Oberfläche als auch die Lage der Ausstattungselemente zueinander.

Bei einem weiteren bevorzugten Verfahren erfolgt das Anbringen der Ausstattung und/oder der Ausstattungselemente an dem Behältnis und/oder die Inspektion des Behältnisses während einer Bewegung des Behältnisses. Bevorzugt erfolgen sowohl das Anbringen der Ausstattung und/oder der Ausstattungselemente an dem Behältnis als auch die Inspektion des Behältnisses während einer Bewegung des Behältnisses.

Besonders bevorzugt wird dabei das Behältnis während der Ausstattung und/oder während der Inspektion entlang eines geradlinigen oder gekrümmten (insbesondere kreisförmig gekrümmten) Transportpfads bewegt.

Bei einem weiteren bevorzugten Verfahren wird das Behältnis während der Ausstattung und/oder während der Inspektion bezüglich seiner Längsachse gedreht.

Bei einem weiteren bevorzugten Verfahren werden die Ausstattungselemente in Form von selbstklebenden Elementen auf dem Behältnis aufgebracht.

Besonders bevorzugt werden die Ausstattungselemente im Wesentlichen zeitgleich aufgebracht. Dies bedeutet, dass die Ausstattungselemente innerhalb von 10s, bevorzugt innerhalb von 5s, bevorzugt innerhalb von 3s und bevorzugt innerhalb von 1s aufgebracht werden.

Besonders bevorzugt werden zumindest einige der Ausstattungselemente mit einem geringen zeitlichen Versatz auf dem Behältnis angebracht. Dieser zeitliche Versatz ist bevorzugt größer als 1ms, bevorzugt größer als 2ms, bevorzugt größer als 5ms.

Bei einem weiteren bevorzugten Verfahren wird unter Berücksichtigung des Kennwerts die Ausstattung des Behältnisses mit dem oder den Ausstattungselementen gesteuert. So kann bevorzugt ein Regelkreis vorgesehen sein, der unter Berücksichtigung des Kennwerts Regelungen, insbesondere an der Ausstattungseinrichtung vornimmt.

So kann beispielsweise eine Transportgeschwindigkeit der Behältnisse geändert werden, die Behältnisse können gedreht werden oder eine Drehgeschwindigkeit der Behältnisse kann geändert werden.

Daneben kann auch ein für eine Einrichtung, welche den Behältnissen die Ausstattungselemente zuführt beispielsweise deren Arbeitsgeschwindigkeit geändert werden.

Die vorliegende Erfindung betrifft weiterhin ein Verfahren zum Inspizieren von Behältnissen, wobei ein Behältnis zur Verfügung gestellt wird und wobei auf wenigstens einem Oberflächenbereich einer Außenwand dieses Behältnisses eine Ausstattung angebracht ist, wobei diese Ausstattung wenigstens ein trägerloses Ausstattungselement und/oder eine Vielzahl von Ausstattungselementen aufweist, welche (wenigstens teilweise) nicht miteinander verbunden sind. Bevorzugt ist keines der Ausstattungselemente mit einem anderen Ausstattungselement verbunden.

Erfindungsgemäß wird dieser mit diesen Ausstattungselementen ausgestattete Oberflächenbereich mittels einer Inspektionseinrichtung inspiziert und es wird wenigstens ein Kennwert ausgegeben, der für wenigstens eine für das (insbesondere wenigstens eine) Ausstattungselement charakteristische Eigenschaft charakteristisch ist.

Bevorzugt ist der Kennwert für eine Position eines ersten Ausstattungselements bezüglich des Oberflächenbereichs und/oder eine Position eines ersten Ausstattungselements bezüglich eines zweiten Ausstattungselements charakteristisch.

Es wird daher auch hier vorgeschlagen, dass insbesondere die Ausrichtung und/oder die Positionierung der Ausstattungselemente geprüft wird.

Die vorliegende Erfindung bezieht sich weiterhin auf eine Vorrichtung zum Inspizieren von Behältnissen und insbesondere von mit Flüssigkeit befüllbaren Behältnissen und insbesondere von Getränkebehältnissen, welche wenigstens eine Ausstattungseinrichtung aufweist, welche dazu geeignet und bestimmt ist, auf wenigstens einem Oberflächenbereich einer Außenwandung eines Behältnisses eine Ausstattung anzubringen, wobei diese Ausstattung wenigstens ein trägerloses Ausstattungselement und/oder eine Vielzahl von Ausstattungselementen aufweist, welche (wenigstens teilweise) nicht miteinander verbunden sind.

Erfindungsgemäß weist die Vorrichtung eine Inspektionseinrichtung auf, die dazu geeignet und bestimmt ist, diesen mit diesen Ausstattungselementen ausgestatteten Oberflächenbereich zu inspizieren und wenigstens einen Kennwert auszugeben, der für wenigstens eine für das Ausstattungselement charakteristische Eigenschaft charakteristisch ist.

Bevorzugt ist der Kennwert für eine Position eines ersten Ausstattungselements bezüglich des Oberflächenbereichs und/oder eine Position des ersten Ausstattungselements bezüglich eines zweiten Ausstattungselements charakteristisch.

Das Inspektionssystem ist bevorzugt in der Lage die entsprechenden Teile des Behältnisses zu inspizieren. Dazu kann das Inspektionssystem einen oder mehrere abbildende Sensoren, wie 2D Kameras, 2D/3D Kameras, Zeilenkameras oder dgl. Aufweisen bestehen.

Der oder die abbildenden Sensoren oder deren Optik können bevorzugt, insbesondere mittels geeigneter Filter, bestimmte Polarisationsrichtungen aussperren.

Weiterhin ist es auch möglich, dass der Sensor (bzw. die Bildaufnahmeeinrichtung) selbst in der Lage ist, die Polarisationsanteile zu unterscheiden (Sony - Polarisationssensor).

Die Beleuchtung kann ein Dauerlicht, ein schaltbares Licht oder bevorzugt eine geblitzte Beleuchtung mit einer Blitzdauer von weniger als 1 ms, bevorzugt weniger als 0,5 ms, besonders bevorzugt weniger als 100 µs, sein.

Die Beleuchtung ist bevorzugt monochromatisch in verschiedenen Wellenlängen, wie Rot, Grün und Blau, aber auch aus UV, IR, oder eine Kombination dieser Wellenlängenbereiche.

Die Beleuchtung kann bevorzugt produktionssortenabhängig unterschiedliche Sets an Wellenlängen kombinieren. Die Beleuchtung kann bevorzugt ein kontinuierliches (Teil-)Spektrum des sichtbaren Lichts sein, dem sog. Weißlicht.

Die Beleuchtung kann weiterhin in Teilen unterschiedliche Wellenlängen abstrahlen, z.B. in Streifen oder anderen Mustern angeordnet, z.B. als zweifarbiges Muster, oder als Regenbogenmuster, oder dergleichen.

Die Beleuchtung kann weiterhin diffus, gerichtet und oder polarisiert erfolgen.

Die Beleuchtungseinrichtung kann ein Auflicht, ein Durchlicht, ein Dunkelfeld oder eine Kombination dieser genannten Beleuchtungsarten sein.

Die abbildenden Sensoren können bevorzugt die Fokusebene, insbesondere mittels automatischer, geregelter oder gesteuerter, Verstellung am Objektiv, bei unterschiedlichen Behälterdurchmessern und damit den unterschiedlichen Abständen zum Sensor anpassen. Diese Anpassung kann bevorzugt einmalig bei einem Sortenwechsel erfolgen.

Die Erkennung kann in der Etikettiermaschine bzw. der Ausstattungseinrichtung erfolgen. Dazu kann bevorzugt entlang des Transportweges (der Behältnisse) mindestens ein Sensor angebracht sein und die entsprechenden Etikettenstellen am etikettierten Behälter werden bevorzugt durch die Ausstattungseinrichtung vorzugsweise annähernd in eine geeignete Position für die Erfassung durch den Sensor (bzw. die Bildaufnahmeeinrichtung) und der Beleuchtung gebracht.

Bevorzugt sind Sensoren entlang des Transportweges angebracht. Diese können abschnittsweise, nach je einem Aggregat oder am Ende aber bevorzugt aggregatsweise zugeordnet sein.

Es können auch ein oder mehrere Sensoren in einer Gruppe angeordnet sein, um in Summe in Kombination mit der Behälterdrehung entlang des Transportweges (insbesondere kontinuierlich, keine getaktete Maschine) einen größeren Umfangsbereich oder den gesamten Umfang des Behälters abbilden zu können.

Bevorzugt kann ein Flächensensor bis zu 120°, bevorzugt bis zu 90°, besonders bevorzugt 20 - 60° in ausreichender Qualität abbilden.

Die Erkennung kann nach der Etikettiereinrichtung bzw. Ausstattungseinrichtung stromabwärts (insbesondere am (Transport)Band) aufgestellt sein (360°ETK am Band). Dazu sind bevorzugt mindestens ein Sensor und eine Beleuchtung so angeordnet, dass sie einen Teil des applizierten Etiketts erfassen können.

Bevorzugt sind mindestens drei, besonders bevorzugt vier oder sechs Sensoren bzw. Bildaufnahmeeinrichtungen in einer Ebene angeordnet. Es können auch mehrere Ebenen sein.

Bevorzugt wird der Abstand der Behältnisse so gewählt, dass die benachbarten Behältnissen zum inspizierten Behältnis genügend weit entfernt sind, um dem Sensor (bzw. der Bildaufnahmeeinrichtung) freie Sicht auf alle interessanten Stellen zu ermöglichen.

Als Negativbeispiel leicht verständlich, wenn die Behälter entlang der Transportstrecke dicht an dicht stehen, kann die Stelle in Transportrichtung nicht eingesehen werden. Andererseits sollte der benachbarte Behälter nicht zu weit entfernt stehen, denn, bei gegebener Produktionsleistung von X Behältern je Zeiteinheit würde dadurch die Transportgeschwindigkeit stark ansteigen. Dies ist unerwünscht.

Die Auswerteeinheit vergleicht bevorzugt das Sensorabbild (bzw. das von der Bildaufnahmeeinrichtung aufgenommene Bild mit den abgelegten Produktionsdaten.

Die Steuereinheit steuert bevorzugt den Zeitpunkt der Bildaufnahme. In der Maschine kann sie das Behälter - Taktsignal und/oder ein kontinuierlich feiner aufgelöstes Bewegungssignal (etwa von einem Drehgeber) benutzen.

Nach der Maschine kann die Steuerungseinrichtung eine Lichtschranke, einen Initiator o.ä. zum Erfassen des Behälters an einem beliebigen Zeitpunkt und/oder ein Weginkrementsignal (Drehgeber, Transportgeschwindigkeit) benutzen.

Die Steuereinheit kompensiert bevorzugt das in der Vorrichtung vorhandene Delay und berechnet in Abhängigkeit der aktuellen Geschwindigkeit, optional der aktuellen Geschwindigkeitsänderung, den dynamischen Vorhalt bis zum Aufnahmezeitpunkt.

Ein Nachteil eines starren Systems liegt darin, dass bei unterschiedlichen Geschwindigkeiten mit fixer Vorhaltezeit die Aufnahme an unterschiedlichen Positionen erfolgen würde.

Die Steuereinheit gleicht bevorzugt beim Sortenwechsel, wenn z.B. der Behälterdurchmesser sich ändert, die Unterschiede aus.

Besonders bevorzugt bestehen die Behältnisse aus Kunststoff, Glas oder Pulpe. Besonders bevorzugt handelt es sich bei den Ausstattungselementen um aus Kunststoff bestehende Ausstattungselemente. Bei einer weiteren bevorzugten Ausführungsform weisen die Ausstattungselemente wenigstens eine selbstklebende Oberfläche auf.

Bei einer weiteren bevorzugten Ausführungsform weist die Vorrichtung eine Steuerungseinrichtung zum Steuern der Ausstattungseinrichtung auf, welche dazu geeignet und bestimmt ist, die Ausstattungseinrichtung unter Berücksichtigung des Kennwerts zu steuern. Insbesondere handelt es sich bei der Steuerungseinrichtung um eine Regelungseinrichtung, welche zum Regeln der Ausstattungseinrichtung unter Berücksichtigung des Kennwerts geeignet und bestimmt ist.

Falls beispielsweise ein Kennwert indiziert, dass ein Abstand zwischen einem Ausstattungselement und einem weiteren Ausstattungselement größer ist als ein vorgegebener Sollwert, kann die Ausstattungseinrichtung derart angesteuert werden, dass der Abstand wieder mit dem Soll - Abstand übereinstimmt oder innerhalb eines durch Grenzwerte begrenzten Bereiches dieses Soll - Abstands liegt.

Bei einer weiteren vorteilhaften Ausführungsform weist die Vorrichtung eine Ausschleuseeinrichtung auf, welche dazu geeignet und bestimmt ist, einzelne Behältnisse unter Berücksichtigung des Kennwerts auszuschleusen. Falls beispielsweise festgestellt wird, dass eine Position eines Ausstattungselements bezüglich eines anderen Ausstattungselements größer ist als es ein Grenzwert bezüglich eines Sollwert erlaubt, kann die Anweisung gegeben werden, dieses Behältnis auszuschleusen.

Bei einer weiteren bevorzugten Ausführungsform ist diese Ausschleuseeinrichtung (in der Transportrichtung der Behältnisse) nach der Ausstattungseinrichtung und nach der Inspektionseinrichtung angeordnet.

Bei einer weiteren vorteilhaften Ausführungsform weist die Vorrichtung eine Transporteinrichtung auf, welche die Behältnisse von der Ausstattungseinrichtung zu der Inspektionseinrichtung transportiert. Besonders bevorzugt ist dabei die Transporteinrichtung dazu geeignet und bestimmt, die Behältnisse vereinzelt zu transportieren. So können beispielsweise Greifelemente vorgesehen sein, welche die Behältnisse an ihren Mündungen beispielsweise an deren Tragringen greifen.

Bei einer weiteren vorteilhaften Ausführungsform weist die Vorrichtung eine Zuordnungseinrichtung auf, welche einem von der Inspektionseinrichtung inspizierten Behältnisses einen Ausstattungsvorgang zuordnet. Dies bedeutet, dass festgestellt werden kann, dass ein bestimmtes Behältnis X, welches von der Inspektionseinrichtung inspiziert wird (insbesondere zu einem vorgegebenen Zeitpunkt oder Zeitraum) von der Ausstattungseinrichtung ausgestattet wurde und insbesondere der betreffende Ausstattungsvorgang identifiziert werden kann. Es kann damit festgestellt werden, welcher bestimmte Ausstattungsvorgang an einem Behältnis zu welchem bestimmten Fehler geführt hat.

Besonders bevorzugt weist Vorrichtung eine Speichereinrichtung auf, welche einzelne Ausstattungsvorgänge und/oder dafür charakteristische Daten und/oder einzelne Inspektionsvorgänge und/oder dafür charakteristische Daten (beispielsweise Kennwerte) abspeichert.

Dabei kann diese Speicherung über einen längeren Zeitraum erfolgen. Auf diese Weise können auch Tendenzen festgestellt werden, beispielsweise wenn sich ein Abstand zwischen einem ersten und einem zweiten Ausstattungselement langsam vergrößert oder langsam verkleinert. In diesem Fall kann beispielsweise gegengesteuert werden. Bei anderen Anomalien der Ausstattungselemente beispielsweise bei einer fehlerhaften Drehstellung eines bestimmten Ausstattungselemente können ebenfalls Gegenmaßnahmen eingeleitet werden.

Bevorzugt werden die von der Bildaufnahmeeinrichtung aufgenommenen Bilder ausgewertet. Zu dieser Auswertung kann bevorzugt eine künstliche Intelligenz eingesetzt werden.

Über eine künstliche Intelligenz kann eine Ähnlichkeitsfunktion zwischen Referenzbildern und Aufnahmen berechnet werden um Abweichungen von der Referenz zu messen.

Außerdem kann eine künstliche Intelligenz zur Lokalisierung der einzelnen Austattungsmerkmale im Bild und Referenzbild verwendet werden. Die Lokalisierung, die Position ist ein Kennwert, wie oben ausgeführt.

Weiterhin ist Inspektionseinrichtung dazu geeignet und bestimmt, festzustellen, ob ein Ausstattungselement ordnungsgemäß an dem Behältnis angeordnet ist, oder ob dieses beispielsweise absteht, Verwerfungen aufweist, oder dergleichen.

Besonders bevorzugt weist die Vorrichtung eine Transporteinrichtung zum Transportieren der Behältnisse, insbesondere auch während des Inspektionsvorgangs auf.

Besonders bevorzugt ist die Transporteinrichtung dazu geeignet und bestimmt, das ausgestattete Behältnis wenigstens abschnittsweise entlang eines kreisförmigen Transportpfads zu transportieren.

Besonders bevorzugt ist die Transporteinrichtung dazu geeignet und bestimmt, die Behältnisse mit einem Abstand zueinander zu transportieren, der größer ist als der halbe Durchmesser (oder gleich dem halben Durchmesser) eines einzelnen Behältnisses.

Bevorzugt ist Transporteinrichtung dazu geeignet und bestimmt, die Behältnisse mit einem Abstand zueinander zu transportieren, der kleiner ist als der sechsfache Durchmesser eines Behältnisses bevorzugt kleiner als der fünffache Durchmesser eines Behältnisses, bevorzugt kleiner als der vierfache Durchmesser eines Behältnisses und besonders bevorzugt kleiner als der dreifache Durchmesser eines Behältnisses.

Bevorzugt ist die Transporteinrichtung dazu geeignet und bestimmt, die Behältnisse individuell und unabhängig voneinander zu transportieren. Dies kann beispielsweise mittels einzeln, rein elektronisch gesteuerter und verschleißfreier Shuttlesysteme erfolgen. Vorteilhaft ist die individuelle Ansteuerung und die direkte Regelung nach Kennwerterfassung und sogar während des Applikationsprozesses.

Bei einer weiteren vorteilhaften Ausführungsform weist die Transporteinrichtung wenigstens ein Transportrad und/oder wenigstens einen Transportstern auf.

Die vorliegende Erfindung ist weiterhin auf eine Inspektionseinrichtung zum Inspizieren eines Behältnisses gerichtet, wobei auf wenigstens einem Oberflächenbereich einer Außenwandung dieses Behältnisses eine Ausstattung angebracht ist wobei diese Ausstattung wenigstens ein trägerloses Ausstattungselement und/oder eine Vielzahl von Ausstattungselementen aufweist, welche (wenigstens teilweise) nicht miteinander verbunden sind.

Erfindungsgemäß ist diese Inspektionseinrichtung dazu geeignet und bestimmt, wenigstens einen Kennwert auszugeben, der für wenigstens eine für das Ausstattungselement charakteristische Eigenschaft charakteristisch ist

Bevorzugt ist der Kennwert für eine Position eines ersten Ausstattungselements bezüglich des Oberflächenbereichs und/oder eine Position eines ersten Ausstattungselements bezüglich eines zweiten Ausstattungselements charakteristisch.

Bevorzugt weist die Inspektionseinrichtung eine Bildaufnahmeeinrichtung auf, welche das Behältnis inspiziert und/oder welche ein ortsaufgelöstes Bild des mit den Ausstattungselementen versehenen Oberflächenbereichs aufnimmt.

Bevorzugt weist die Inspektionseinrichtung eine Beleuchtungseinrichtung auf, welche die Oberfläche bzw. die Ausstattung beleuchtet. Besonders bevorzugt weist die Inspektionseinrichtung eine Transporteinrichtung auf, welche die inspizieren Behältnisse entlang eines vorgegebenen Transportpfads transportiert.

Weitere Vorteile und Ausführungsformen ergeben sich aus den beigefügten Zeichnungen:
Darin zeigen:
- Fig. 1: eine Darstellung einer Ausstattung nach dem Stand der Technik;
- Fig. 2: eine Darstellung einer erfindungsgemäßen Ausstattung eines Behältnisses;
- Fig. 3: eine Darstellung eines Ablaufs zur Veranschaulichung der Erfindung;
- Fig. 4: eine Darstellung zur Erfassung eines Einzeletiketts oder eines Ausstattungselements; und
- Fig. 5: eine Darstellung zur Erfassung unterschiedlicher Fehler.

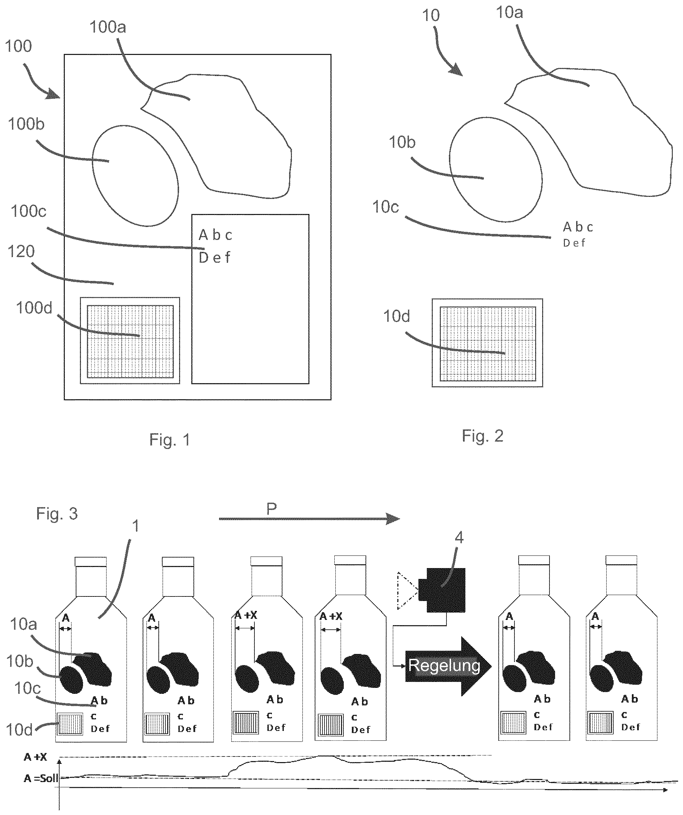

Figur 1 zeigt eine Ausstattung, wie beispielsweise ein Etikett nach dem Stand der Technik. Diese Ausstattung weist hier mehrere Ausstattungselemente 100a, 100b, 100c und 100d auf. Diese sind hier bildliche Elemente, die auf einem Träger 120 angeordnet oder in diesen integriert sind.

Damit sind hier alle Ausstattungselemente 100a-d, miteinander über den Träger 120 fest verbunden. Es wird daher bei einer Inspektion oder einer Aufbringung dieses Etiketts 100 nicht zu Positionsverschiebungen einzelner Ausstattungsmerkmale bezüglich einander kommen.

Figur 2 zeigt eine erfindungsgemäße Ausstattung. Auch hier sind mehrere Ausstattungselemente 10a, 10b, 10c und 10d vorgesehen. Man erkennt, dass diese Ausstattungselemente, beispielsweise die Bildelemente 10a oder 10b sein können, Buchstabenzusammenstellungen (10c) oder auch Markierungselemente wie Barcodes (10d).

Anders als bei den in Figur 1 gezeigten Etikett bzw. der dortigen Ausstattung ist bei der erfindungsgemäßen Ausstattung kein Träger vorhanden und die Ausstattungselemente sind daher nicht miteinander verbunden.

Wenn diese auf dem Behältnis aufgebracht werden, werden diese also separat voneinander aufgebracht, beispielsweise aufgeklebt. Aus diesem Grunde kann es bei der Herstellung vorkommen, dass die einzelnen Ausstattungselemente wie beispielsweise die Ausstattungselemente 10a oder 10b einen von einem Soll - Abstand abweichenden Abstand aufweisen.

Figur 3 zeigt eine Darstellung zur Veranschaulichung der Erfindung. Dabei werden mehrere Behältnisse 1, welche jeweils die Ausstattungselemente 10a, 10b, 10c und 10c aufweisen, entlang eines Transportpfads P transportiert. Schematisch ist eine Bildaufnahmeeinrichtung 4 dargestellt, welche die einzelnen Ausstattungselemente auf den Behältnissen 1 aufnimmt und welche Bestandteil einer (nicht gezeigten) Inspektionseinrichtung ist.

Bei der in Figur 3 gezeigten Situation sollen die Ausstattungselemente 10b und 10a zueinander bezogen auf ihre jeweiligen anfangs Punkte einen Abstand A aufweisen. Dies ist gleichzeitig der Sollabstand. In der Teilfigur unten wird der Sollabstand (waagrechte Linie) gegenüber dem tatsächlichen Abstand gezeigt. Man erkennt, dass die ersten beiden Behältnisse von links jeweils Ausstattungselemente aufweisen, welche diesen Soll - Abstand zueinander haben. Das dritte Behältnis sowie das vierte Behältnis von links weisen jeweils Ausstattungselemente 10a und 10b auf, bei denen der Abstand größer ist, nämlich hier A + X.

Man erkennt an der Verlaufskurve unten, dass der Abstand zwischen den Ausstattungselementen 10a und 10b größer wird. Die Regelung wirkt bevorzugt auf die (nicht gezeigte) Ausstattungseinrichtung ein und bewirkt das auf diese Weise der Abstand zwischen den Ausstattungselementen 10a und 10b sich wieder verkleinert und wieder auf den Sollwert A zurückgeführt wird.

Es wäre doch auch möglich, in anderer Weise auf abweichende Abstände zwischen den Ausstattungselementen 10a und 10b zu reagieren. Falls beispielsweise der Abstand zweier Ausstattungselemente zu groß wird oder zu klein wird und nicht mehr nachgeregelt werden kann, kann eine Anweisung an eine Ausschleuseeinrichtung (nicht gezeigt) ausgegeben werden, welche die jeweils so ausgestatteten Behältnisse ausschleust.

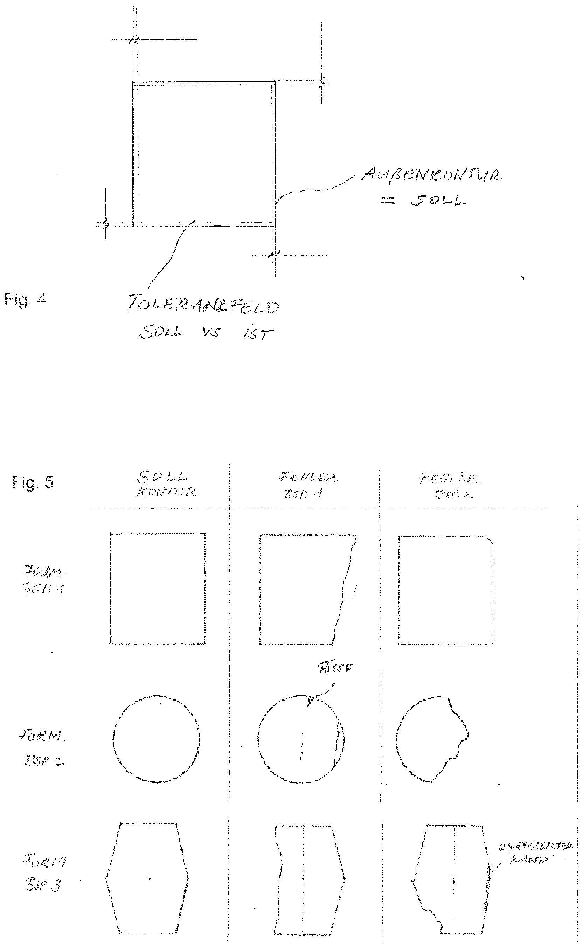

Fig. 4 zeigt eine Darstellung zur Auswertung von Etiketten. Dabei ist ein Etikett oder eine Ausstattung oder ein Ausstattungselement dargestellt. Die durchgezogene Linie kennzeichnet eine Sollkontur. Es wird bevorzugt geprüft ob das tatsächlich erfasste Etikett oder die tatsächlich erfasste Ausstattung innerhalb eines Toleranzfeldes liegt. Dieses Toleranzfeld kann dabei definiert werden.

Auch kann geprüft werden, ob einzelne Abschnitt des aufgenommenen Etiketts oder der aufgenommenen Ausstattung innerhalb vorgegebener Toleranzfelder liegen.

Fig. 5 zeigt Beispiele für möglicherweise auftretende Fehler. In der oberen Zeil ist zunächst der Sollzustand einer Ausstattung gezeigt, hier rechteckig ist. Bei einem ersten Fehlerbeispiel fehlt ein Teil eines Etiketts und bei einem zweiten Fehlerbeispiel ist eine Ecke (hier rechts oben) umgeknickt oder fehlt.

In der mittleren Zeile ist wiederum links die Sollform eines Etiketts oder einer Ausstattung gezeigt. In der mittleren Darstellung treten Fehler in Form von Rissen auf und bei der rechten Darstellung fehlt wiederum ein Teil der Ausstattung bzw. des Etiketts.

In der untersten Zeile ist links wiederum die Sollform dargestellt. Bei dem ersten Fehler können Risse vorhanden sein und/oder ein Teil der Ausstattung fehlen. Bei dem zweiten Fehler liegt rechts ein umgefalteter Rand vor.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Inspizieren von Behältnissen (1) wobei auf wenigstens einem Oberflächenbereich einer Außenwandung eines Behältnisses eine Ausstattung angebracht wird wobei diese Ausstattung (10) wenigstens ein trägerloses Ausstattungselement und bevorzugt eine Vielzahl von Ausstattungselementen (10a, 10b, 10c) aufweist welche wenigstens teilweise nicht miteinander verbunden sind,
**dadurch gekennzeichnet, dass**
dieser mit diesem wenigstens einen Ausstattungselement oder mit diesen Ausstattungselementen (10a, 10b, 10c) ausgestattete Oberflächenbereich mittels einer Inspektionseinrichtung (4) inspiziert wird und wenigstens ein Kennwert (A) ausgegeben wird, der für wenigstens eine für das erste Ausstattungselement charakteristische Eigenschaft charakteristisch ist.

2. Verfahren nach dem vorangegangenen Anspruch,
**dadurch gekennzeichnet, dass**
es sich bei der Eigenschaft um eine für das erste Ausstattungselement individuell charakteristische Eigenschaft handelt.

3. Verfahren nach wenigstens einem der vorangegangenen Ansprüche,
**dadurch gekennzeichnet, dass**
wenigstens ein Ausstattungselement zu wenigstens einem weiteren Ausstattungselement und bevorzugt zu jedem weiteren Ausstattungselement einen vorgegebenen Mindestabstand aufweist und dieser Mindestabstand größer ist als 0,5mm, bevorzugt größer als 1 mm.

4. Verfahren nach wenigstens einem der vorangegangenen Ansprüche,
**dadurch gekennzeichnet, dass**
die Inspektion mittels einer Bildaufnahmeeinrichtung erfolgt, welche ein ortsaufgelöstes Bild des mit den Ausstattungselementen versehenen Oberflächenbereichs aufnimmt.

5. Verfahren nach wenigstens einem der vorangegangenen Ansprüche,
**dadurch gekennzeichnet, dass**
der Kennwert aus einer Gruppe von Kennwerten ausgewählt ist, welche einen Kennwert, der für eine Position des Ausstattungselement gegenüber dem Oberflächenbereich in einer Längsrichtung des Behältnisses, für eine Position des Ausstattungselements gegenüber dem Oberflächenbereich in einer Umfangsrichtung des Behältnisses, für eine Position des Ausstattungselement gegenüber einem weiteren Ausstattungselement in einer Längsrichtung des Behältnisses, für eine Position des Ausstattungselement gegenüber einem weiteren Ausstattungselement in einer Umfangsrichtung des Behältnisses, für eine Drehstellung des Ausstattungselement gegenüber dem Oberflächenbereich, für eine Drehstellung des Ausstattungselement gegenüber dem weiteren Ausstattungselement, für eine Verzerrung des Ausstattungselements, für eine Verformung des Ausstattungselements, für ein Vorhandensein des Ausstattungselements, für einen Informationsgehalt des Ausstattungselements, für die Übereinstimmung einer Ist - Beschaffenheit des Ausstattungselements mit einer Sollbeschaffenheit des Ausstattungselements, vorzugsweise der Beschaffenheit der Kontur des Ausstattungselements, und Kombinationen hieraus charakteristisch ist.

6. Verfahren nach wenigstens einem der vorangegangenen Ansprüche,
**dadurch gekennzeichnet, dass**
ein Bild des mit den Ausstattungselementen ausgestatteten Oberflächenbereichs aufgenommen wird und dieses Bild mit wenigstens einem Referenzbild verglichen wird.

7. Verfahren nach wenigstens einem der vorangegangenen Ansprüche,
**dadurch gekennzeichnet, dass**
der Kennwert mit einem Sollwert verglichen wird und bevorzugt wenigstens ein für diesen Vergleich charakteristischer Wert ausgegeben wird.

8. Verfahren nach wenigstens einem der vorangegangenen Ansprüche,
**dadurch gekennzeichnet, dass**
das Anbringen der Ausstattung an dem Behältnis und/oder die Inspektion des Behältnisses während einer Bewegung des Behältnisses erfolgen.

9. Verfahren nach wenigstens einem der vorangegangenen Ansprüche,
**dadurch gekennzeichnet, dass**
unter Berücksichtigung des Kennwerts die Ausstattung des Behältnisses mit dem oder den Ausstattungselementen gesteuert wird.

10. Verfahren zum Inspizieren von Behältnissen (10) wobei ein Behältnis (10) zur Verfügung gestellt wird, wobei auf wenigstens einem Oberflächenbereich einer Außenwandung dieses Behältnisses (10) eine Ausstattung angebracht ist wobei diese Ausstattung (10) wenigstens ein trägerloses Ausstattungselement und/oder eine Vielzahl von Ausstattungselementen (10a, 10b, 10c) aufweist welche wenigstens teilweise nicht miteinander verbunden sind,
**dadurch gekennzeichnet, dass**
dieser mit diesen Ausstattungselementen ausgestattete Oberflächenbereich mittels einer Inspektionseinrichtung (4) inspiziert wird und wenigstens ein Kennwert ausgegeben wird, der für wenigstens eine für das Ausstattungselement charakteristische Eigenschaft charakteristisch ist.

11. Vorrichtung zum Inspizieren von Behältnissen (10) mit einer Ausstattungseinrichtung, welche dazu geeignet und bestimmt ist, auf wenigstens einem Oberflächenbereich einer Außenwandung eines Behältnisses eine Ausstattung anzubringen wobei diese Ausstattung (10) wenigstens ein trägerloses Ausstattungselement und und/oder eine Vielzahl von Ausstattungselementen (10a, 10b, 10c) aufweist welche nicht miteinander verbunden sind,
**dadurch gekennzeichnet, dass**
die Vorrichtung eine Inspektionseinrichtung aufweist, die dazu geeignet und bestimmt ist diesen mit diesen Ausstattungselementen ausgestatteten Oberflächenbereich zu inspizieren und wenigstens einen Kennwert auszugeben, der für wenigstens eine für das Ausstattungselement charakteristische Eigenschaft charakteristisch ist.

12. Vorrichtung nach Anspruch 11, mit einer Steuerungseinrichtung zum Steuern der Ausstattungseinrichtung, welche dazu geeignet und bestimmt ist, die Ausstattungseinrichtung unter Berücksichtigung des Kennwerts zu steuern.

13. Vorrichtung nach wenigstens einem der vorangegangenen Ansprüche 11 - 12 mit einer Ausschleuseeinrichtung, welche dazu geeignet und bestimmt ist, einzelne Behältnisse unter Berücksichtigung des Kennwerts auszuschleusen.

14. Vorrichtung nach wenigstens einem der vorangegangenen Ansprüche 11 - 13,
**dadurch gekennzeichnet, dass**
die Vorrichtung eine Transporteinrichtung aufweist, welche die Behältnisse von der Ausstattungseinrichtung zu der Inspektionseinrichtung transportiert.

15. Inspektionseinrichtung zum Inspizieren eines Behältnisses (10) wobei auf wenigstens einem Oberflächenbereich einer Außenwandung dieses Behältnisses eine Ausstattung angebracht ist wobei diese Ausstattung (10) wenigstens ein trägerloses Ausstattungselement und/oder eine Vielzahl von Ausstattungselementen (10a, 10b, 10c) aufweist welche nicht miteinander verbunden sind,
**dadurch gekennzeichnet, dass**
diese Inspektionseinrichtung dazu geeignet und bestimmt ist, wenigstens einen Kennwert auszugeben wird, der für wenigstens eine für das erste Ausstattungselement charakteristische Eigenschaft charakteristisch ist.
